# EUROPEAN PATENT APPLICATION

(11) **EP 3 419 156 A1**
(43) Date of publication of application: **26.12.2018**
(21) Application number: 17177512.5
(22) Date of filing: 22.06.2017
(51) Int. Cl.: H02M 3/335

(54) **HIGH-FREQUENCY TRANSFORMER**

(71) Applicant: DRUM-Engineering e.K, 53879 Euskirchen (DE)
(72) Inventor: Marek, Udo, 53879 Euskirchen (DE)
(74) Representative: dompatent von Kreisler Selting Werner - Partnerschaft von Patent- und Rechtsanwälten mbB

(57) **Abstract**

The invention relates to a high current source especially for high frequency (HF) resistance welding as well as to a method for providing high-current for a mobile welding system. A high-current source according to the invention is suitable for being integrated in a housing being integrated in a mobile electric resistance welding system, having a primary side and a secondary side and comprises at least one high-frequency inverter, at least one transformer and at least one rectifier unit. It is characterized in that the primary side of the high-current source is provided with two single switches and the secondary side of the high-current source is provided with a current doubler circuit. The method for providing high-current for a mobile welding system, comprising at least one high-frequency inverter, at least one transformer and at least one rectifier unit, is characterized in that the primary and the secondary side of the at least one transformer are operated synchronously.

## Description

The invention relates to a high current source especially for high frequency (HF) resistance welding.

The invention also relates to a method for providing high current, especially for a mobile welding system.

### BACKGROUND OF THE INVENTION

In sheet metal manufacturing for automotive purposes electrical resistance welding with medium frequency of approx. 1 kHz is commonly used. In case of using aluminum as the main construction material, welding current higher than 40 kA is necessary. However, even the newest 1 kHz current transformers still have a weight of 45 kg and more in order to provide the required performance. These transformers are usually center tapped on the secondary side and a rectifier circuit with diodes is implemented. The primary side of the transformer is usually connected to an external 1 kHz medium frequency inverter. Conventionally a full bridge circuit is used inside the inverter. Often the inverters are connected in parallel as master-slave arrangements. Depending on the primary connection capacity and number of inverters, the weight of the inverters may be expected at approx. 40 kg, resulting in a total weight of all components of nearly 100 kg.

Vehicles are commonly produced in mass production. Therefore, automotive production is highly automated. At present, the inverters are not installed directly on robot-guided weld guns because of limited space and load capacity. This causes that a welding robot only has to bear the weight of the weld gun with integrated transformer. However, for reasons of efficiency and performance, it is desirable to put both, the transformer and the inverter, as close as possible to the welding spot, i.e. to the welding robot. Making a welding robot capable of bearing the load of both the transformer and the inverter as they are state of the art, results in robust and heavy moving members of the robot, i.e. in a loss of speed and energy in operation. Moreover, such robots are expensive. Therefore, 10 kHz inverters, implemented externally, and transformers are being tested at the moment. However, the weight advantages of the transformers are rather marginal.

### SUMMARY OF THE INVENTION

The objective of the invention is to provide a welding transformer with integrated power electronics of the inverter, whose weight is significant lower than those of the state of the art and which fits into the construction volume of the current medium-frequency transformers used for resistance welding of aluminum as well as steel.

The objective of the invention is also to provide a method for providing high current for a mobile welding system.

According to the invention, this objective is achieved by a device having the features of the independent Claim 1. Advantageous refinements of the device are set forth in the subordinate Claims 2 through 14.

The objective is also achieved by a method according to Claim 15.

A high-current source according to the invention is suitable for being integrated into a housing being integrated with a mobile electric resistance welding system, having a primary side and a secondary side and comprising at least one high-frequency inverter, at least one transformer and at least one rectifier unit. It is characterized in that the primary side of the high-current source is provided with two single switches and the secondary side of the high-current source is provided with a current doubler circuit.

In the following, the expression "primary..." will be interchangeably used with "on the primary side of ..." or "...of the primary side". Therefore, the expression "secondary.." follows the same rules and can be interchangeably used with "on the secondary side of..." or "...of the secondary side". Both refer to a side of the circuit and therefore, the transformer.

A considerable advantage of the single switches of the primary side is that the switching losses as well as the costs of the power electronics components including the gate drivers are significantly lower, for example halved, in comparison to the full bridge used to date. Moreover, the number of components used in the circuit is minimized. Furthermore, the volume needed for the circuit is minimized as well with the result of a compact structure. On the secondary side of the high-current source a current doubler circuit is provided. Thereby, the secondary side of the transformer is designed without center tap, but is still only in need of two switches. Two inductances are needed in addition. The output current is built by adding two coil currents. On the secondary output of the transformer the voltage uₛ is 2 x Uₐ. As a result, the cross-section area of the secondary winding wire can be decreased and the windings of the primary side can be halved to achieve the same output current Iₐ und Voltage Uₐ compared to a center tapped transformer design. With the current doubler circuit on the secondary side of the high-current source, the center tap on the transformer, which is structurally difficult at higher currents, is avoided, so that the magnetic coupling of the two secondary-side coil halves is also eliminated. The weight of the inventive high-current source is significantly lower than that of known high-current sources.

In an advantageous embodiment, the current doubler circuit is provided with MOSFETs. MOSFETs have the advantage of lower switching and line losses compared to the diode variant used in the state of the art, whereby loss reductions up to 85% are possible. Also, the duty cycle of MOSFETs in the selected power range is many times higher than that of diodes. For example, a high-current diode with a peak current of 70,000 A has a maximum continuous current of approx. 13,000 A, whereas with the use of MOSFETs the theoretical continuous current corresponds to the peak current.

In an advantageous embodiment, the frequency of the at least one high-frequency inverter is between 20 kHz and 500 kHz. The frequency range allows a combined sharing of casing by all components.

In an advantageous embodiment, the at least one transformer is a planar-transformer. Planar-transformers are flat and particularly small due to their good dissipation of power loss. Depending on the design, the power weight of the planar transformers with available core geometries and comparable ohmic power dissipation is between 0.36 kg / kA (Imax approx. 14 kA) and 0.07 kg / kA (Imax approx. 4.5 kA). This results in a parallelized design with small planar transformers and a weight-power ratio that is as highly reduced as possible.

In an advantageous embodiment, the primary side of the high-current source features a power semiconductor of silicon, silicon carbide, gallium nitride or of the group of gallium oxide. With such power semiconductors, the energy efficiency is maximized. Even though power semiconductors based on silicon are cheaper, the power loss of semiconductors based on silicon is also higher than that of semiconductors based on silicon carbide, gallium nitride or on the group of gallium oxide.

In an advantageous embodiment, the primary side and the secondary side of the high-current source feature power semiconductors with electronic components, whereby the electronic components are arranged on a circuit board having multiple layers. The electronic components of the primary and secondary power semiconductors may be integrated on the circuit board, which results in a very simple design of the high-current source.

In an advantageous embodiment, the at least one transformer features a ferrite core, whereby the transformer core is encapsulated.

In an advantageous embodiment, the circuit board features circuit paths, the thickness of which is less than 0.5 mm. Due to the skin effect, the maximum possible thickness of the conductor paths is influenced by the operating frequency. At the preferred frequency of at least 100 kHz, a maximum conductor thickness of 0.5 mm is obtained.

In an alternative embodiment, the at least one transformer on the primary and secondary side feature power semiconductors with electronic components arranged on a circuit board, whereby the transformer as well as the circuit board are produced via additive manufacturing.

In another alternative embodiment, the at least one transformer on the primary side has a single or/and double coil unit with insulation and with a folded structure. The primary electromagnetic coil of the transformer is generated by folding a planar structure. By stacking the components the integration of insulation is simplified. The coil of the transformer can be built as single coil as well as contra-rotating double coil.

In another alternative embodiment, the electromagnetic coil unit(s) of the transformer on the primary side feature(s) welded sheet metal segments. Laser, TIG, microplasma, ultrasonic, resistance and linear friction welding are suitable as processes.

In an advantageous embodiment, at least one insulated segment of a coil unit on the secondary side is inserted into the folded structure of any coil unit of the primary side. Furthermore, in an advantageous embodiment, the at least one insulated segment of the coil unit on the secondary side is switched in parallel via intermediate members, whereby at least one isolated segment of the coil unit on the secondary side is distorted, brazed, welded or, when more than one segments are used, bolted to each other. Furthermore, in an advantageous embodiment, the primary side and the secondary side of the at least one transformer feature power semiconductors with electronic components on at least one circuit board, whereby the at least one circuit board is connected with electromagnetic coils, whereby the connection is made via distortion, bolting or welding. The size of the high-current source is further minimized.

In an advantageous embodiment, the high-current source features at least one planar transformer with a max current between 3 kA and 6 kA which is connected with a circuit board structure.

According to the invention, the method for providing high current for a mobile welding system, comprising at least one high-frequency inverter, at least one transformer and at least one rectifier unit, is characterized in that the primary (inverter) and the secondary side (rectifier) of the at least one transformer are operated synchronously. Since the process control controls both the control of the primary side and secondary side power semiconductors, the power semiconductors can be operated in a synchronized manner without the need for additional equipment-related expenditure for determining the secondary side current flow. This circumstance has the further advantage that the secondary side power semiconductors are switched in the current zero crossing and thus the switching losses can be considerably reduced.

Another advantage of using high-current source according to the invention is that the system can be scaled very easily, from a maximum current of 4,500 A to 80,000 A and above, without changing the relevant components.

Additional advantages, special features and practical refinements of the invention can be gleaned from the subordinate claims and from the presentation below of preferred embodiments making reference to the figures.

### BRIEF DESCRIPTION OF THE DRAWINGS

- Figure 1: Circuit diagram of a high-current source according to the invention
- Figure 2: Principle of bending coils, stacking of bended coils and double coil unit
- Figure 3: Assembly of contra-rotating coils consisting of two folded single coil units into a double coil unit
- Figure 4: Layer stack of double coil unit with insulation
- Figure 5: Coil winding of secondary side

### DETAILED DESCRIPTION OF THE DRAWINGS

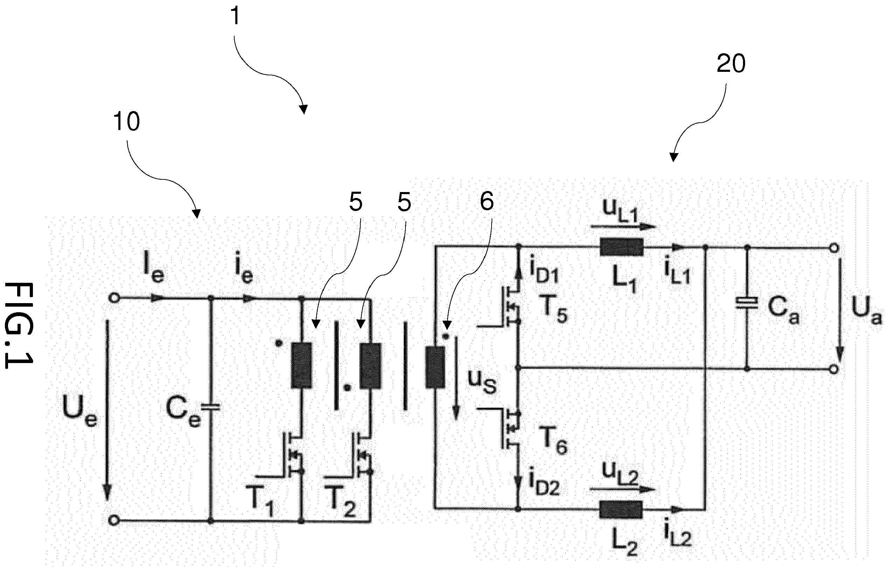

In figure 1, a circuit diagram of a high-current source 1 according to the invention is shown. A primary side 10 is implemented as two single switches, with an input DC voltage Uₑ, which is dependent on the supply voltage (at 400 V mains voltage the input voltage Uₑ is 560 V, which can be higher for example in the US, where the mains voltage is higher) and an input current Iₑ, which is dependent on the size of the transformer core, as input parameters. A link capacitor compensates the lead inductance between source and power electronics and reduces voltage peaks caused by switching elements. The primary side 10 has a first and a second transistor T1 and T2 that switch alternately in order to obtain an AC voltage from the DC input voltage Uₑ. Each primary switch is connected to a primary coil of the transformer and the ton time of one cycle is equal for both transistors. The coils are wound in reverse directions to each other so that the transformer is operated in balance. The considerable advantage of this circuit is that the switching losses as well as the costs of the power electronics components including the gate drivers are halved in comparison to the full bridge used up to now. The disadvantage of a required second primary coil is acceptable.

On the secondary side 20, a current doubler circuit with MOSFETs is used to reverse the transformed input AC voltage uₛ back into a DC output voltage Uₐ. An output capacitance Cₐ can be used, but is not necessarily needed. Starting at the first active period the voltage across the secondary winding of the transformer, uₛ is positive. Currents i_{D1} and i_{D2} flow in positive direction in a first and a second filter inductor, L1 and L2. During this period T6 is switched on while T5 is off. It means that the current path for L2 runs through T6 and the output capacitor, basically kept away from the secondary winding of the transformer. The current of the second filter inductor i_{D2} flows through the transformer winding and T6, closing the loop through the output capacitor. Hence, the output current Iₐ is the sum of the DC components of the two filter inductor currents i_{D1} and i_{D2}, the transformer sees only half of the load current during the active time interval. During this time, the voltage across L2 u_{L2} is negative and equals the output voltage Uₐ causing the current in L2 to decrease. On the other hand, the voltage across L1 u_{L1} is positive, causing the current in L1 to increase. The active period is followed by a free-wheeling interval. uₛ is not forced across the secondary winding of the transformer any longer. The voltage across L1 u_{L1} becomes negative, and equal to the output voltage amplitude, producing a negative slope in the current through L1. As in the full-wave case, theory would suggest that the current of L1 goes through T5 instead of the transformer winding, but in practice this current will continue, due to flow in the transformers secondary. The conditions for L2 do not change. At the beginning of the consecutive active interval, a negative voltage appears on the output of the transformer. T6 is switched off while T5 is switched on. The current rapidly changes direction in the transformer winding, and is equal to the current of L2. The current of L1 i_{L1} is not flowing through the transformer any longer and keeps decreasing by the rate determined by the inductance value and the output voltage. Having a positive voltage across L2, the current starts building up in the inductor. The full operating cycle is completed by another free-wheeling period when uₛ becomes zero, - Uₐ appears on L2 causing its current i_{L2} to decrease and there is no change in the condition of L1.

This current doubler circuit has the advantage of lower switching and line losses compared to the diode variant used in the state of the art with a loss reduction up to 85%. Also, the duty cycle of the MOSFETs in the selected power range is many times higher than that of diodes. A high-current diode with a peak current of 70,000 A has a maximum continuous current of approx. 13,000 A, whereas with the use of MOSFETs the theoretical continuous current corresponds to the peak current.

Depending on the design, the power weight of the planar transformers with available core geometries and comparable ohmic power dissipation is between 0.36 kg / kA (Imax approx. 14 kA) and 0.07 kg / kA (Imax approx. 4.5 kA). This results in a parallelized design with small planar transformers for a design with as little performance weight as possible.

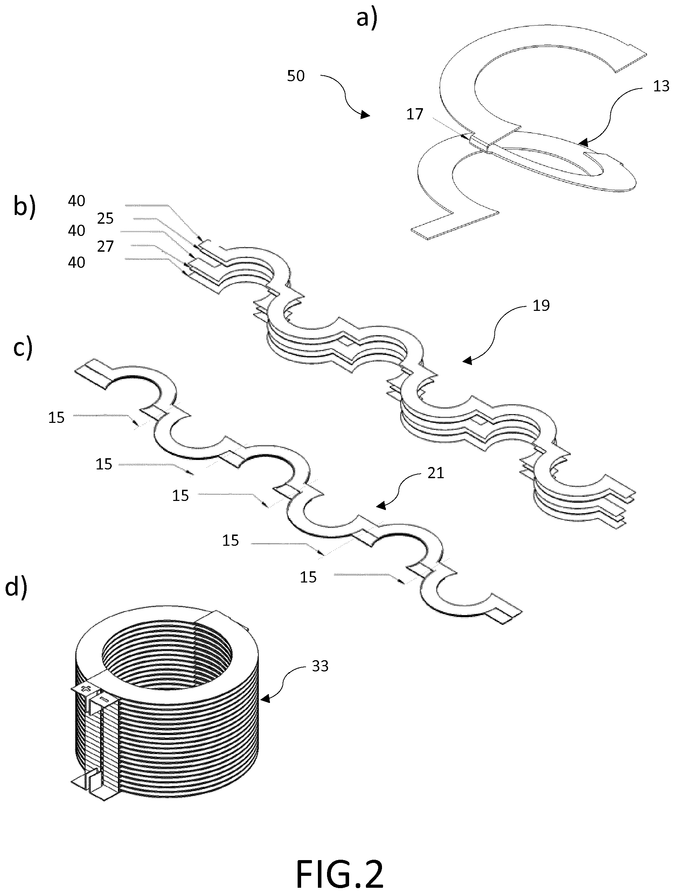

Figure 2 shows a method to assemble a contra-rotating double coil unit 33 for a primary side 10 of a high-current source. In figure 2 a) a principle of folding 50 coils via an excerpt of a single coil unit with 1.5 windings 13 is shown. A coil with any number of windings is made out of metal and folded according to the principle of figure 2 a) to become a coil unit with a folded structure. A primary side of a high-current source 10, suitable for being integrated in a housing being integrated in a mobile electric resistance welding system, has a first single coil 25 and a second single coil 27 and, when folded according to figure 2, a first single coil unit 11 and a second single coil unit 22. A space between a first and second winding of one coil to include a third external winding 17 is integrated in figure 2 a). Figure 2 b) shows an expanded plane stack 19 made up of alternating layers between layers of insulation 40 and the first and the second single coil layers 25, 27. In figure 2 c), a folding line 15 can be seen between every half winding of a plane stack 21, which is the compacted plane stack 19 of figure 2 b). The folding line 15 defines a folding pattern of the single coil layers 25, 27 into the single coil units 11, 22 and the plane stack 19, 21 into a double coil unit 33 as shown in figure 2 d). The method shown in figure 2 for assembling the contra-rotating double coil unit for the primary side of the high-current source is to layer different layers 40, 25, 27 first and then folding said layers simultaneously. The advantage herein is a reduction of assembly time and therefore production time.

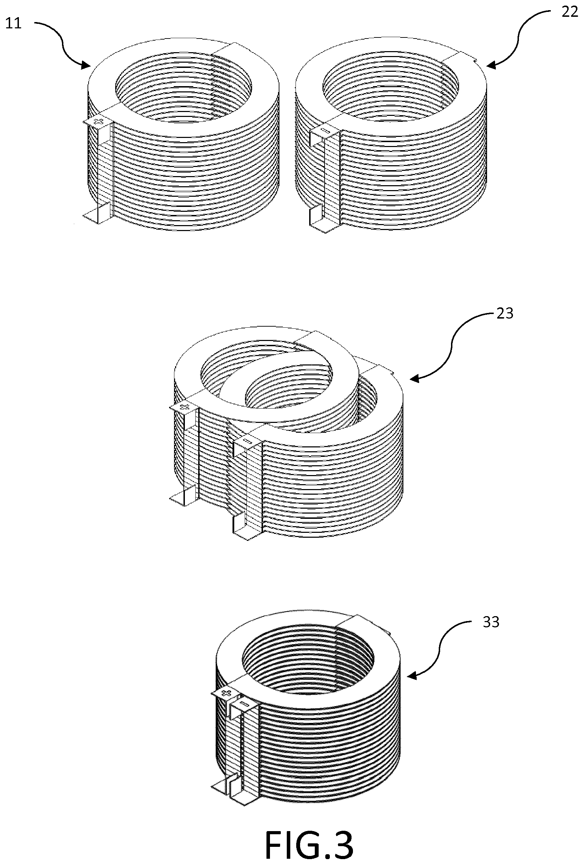

An alternative method of assembling a double coil unit 33 is shown in figure 3 in which an electromagnetic first single coil unit 11, that represents a plus/positive side at the top and an electromagnetic second single coil unit 22, that represents a minus/negative side at the top, which is oppositely poled to the first single coil unit 11, are folded separately and then assembled 23 into an electromagnetic double coil unit 33. The advantage of using two single coil units is the possibility to use this type of coil for standard planar transformers where single primary coils are needed.

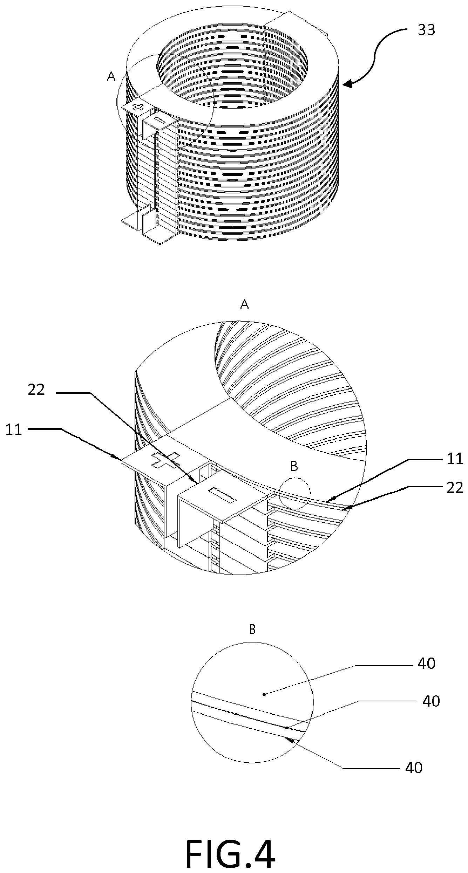

Figure 4 further shows the layer stack of the contra-rotating double coil unit 33 on the primary side of a high-current source. The single coil layers 25, 27, 11, 22 are sandwiched between insulation 40 and are therefore insulated to each other and to the outside.

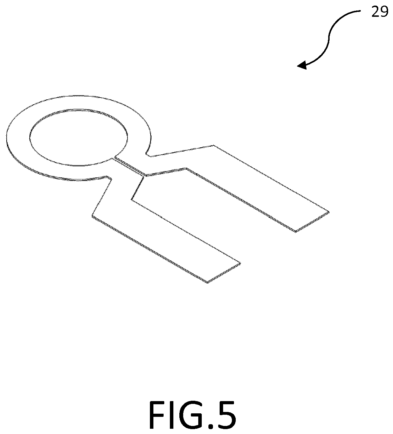

Figure 5 shows a winding on a secondary side 20 in a circuit as claimed in claim 1. The number of winding(s) on the secondary side 20 depend(s) on the number of windings of a corresponding coil unit (single or double) of the primary side 10. An electromagnetic coil unit of the secondary side 20, which can also be called "secondary coil unit", is formed out of multiple single windings 29, which are connected in parallel. The resulting physical number of windings on the secondary side 20 is one. At least one insulated segment of a coil unit on the secondary side 20 is inserted into the folded structure of any coil unit 11, 22, 33 of the primary side 10 and the at least one insulated segment of the coil unit on the secondary side 20 is switched in parallel via intermediate members. Thereby, at least one isolated segment of the coil unit on the secondary side 20 is distorted, brazed, welded or, when more than one segments are used, which is normally the case, the segments are bolted to each other.

### List of reference numerals

- 1: high-current source
- 5: transformer on primary side of high-current source
- 6: transformer on secondary side of high-current source
- 10: primary side
- 11: first single coil unit
- 13: excerpt of a single coil unit with 1.5 windings
- 15: folding line
- 17: A space between a first and second winding of one coil to include a third external winding
- 19: expanded plane stack
- 20: secondary side
- 21: plane stack
- 22: second single coil unit
- 23: assembly of two folded single coil units
- 25: first single coil layer
- 27: second single coil layer
- 29: single winding on secondary side
- 33: double coil unit
- 40: insulation
- 50: principle of bending
- Uₑ: DC input voltage
- Iₑ: input current
- iₑ: input current
- Cₑ: input capacitance
- T₁: first transistor
- T₂: second transistor
- uₛ: transformed input AC voltage
- i_{D1}: current flow in positive direction in first filter inductor L1
- T₅: first MOSFET
- T₆: second MOSFET
- i_{D2}: current flow in positive direction in second filter inductor L2
- L₁: first filter inductor L1
- u_{L1}: voltage across L1
- i_{L1}: current of the first inductance
- L₂: second filter inductor L2
- u_{L2}: voltage across L2
- i_{L2}: current of the second inductance
- Cₐ: output capacitance
- Uₐ: DC output voltage
- Iₐ: output current

## Claims

1. High-current source (1), suitable for being integrated in a housing being integrated in a mobile electric resistance welding system, having a primary side (10) and a secondary side (20), comprising at least one high-frequency inverter, at least one transformer (5, 6) and at least one rectifier unit,
**characterized in that,**
the primary side (10) of the high-current source is provided with two single switches and the secondary side is provided with a current doubler circuit.

2. The high-current source (1) according to Claim 1,
**characterized in that,**
the current double circuit is provided with MOSFETs (T₅, T₆).

3. The high-current source (1) according to any of the previous Claims,
**characterized in that,**
the frequency of the at least one high-frequency inverter is between 20 kHz and 500 kHz.

4. The high-current source (1) according to any of the previous Claims,
**characterized in that,**
the at least one transformer (5, 6) is a planar-transformer.

5. The high-current source (1) according to any of the previous Claims,
**characterized in that,**
the primary side (10) of the high-current source features a power semiconductor of silicon, silicon carbide, gallium nitride or of the group of gallium oxide.

6. The high-current source (1) according to any of the previous Claims,
**characterized in that,**
the primary side (10) and the secondary side (20) of the high-current source feature power semiconductors with electronic components, whereby the electronic components are arranged on a circuit board having multiple layers.

7. The high-current source (1) according to Claim 6,
**characterized in that,**
the at least one transformer (5, 6) features a ferrite core, whereby the transformer core is encapsulated.

8. The high-current source (1) according to Claim 6 or 7,
**characterized in that,**
the circuit board features circuit paths, the thickness of which is less than 0,5 mm.

9. The high-current source (1) according to any of the Claims 1 to 8,
**characterized in that,**
the at least one transformer (5) on the primary side (10) has a single or/and double coil unit (33) with insulation (40) and with a folded structure (50).

10. The high-current source (1) according to any of the Claims 1 to 8,
**characterized in that,**
two single coil units (11, 22) of the primary side (10) of the transformer (5) feature welded or brazed sheet metal segments.

11. The high-current source (1) according to Claim 9 or 10,
**characterized in that,**
at least one insulated segment of a coil unit on the secondary side (20) is inserted into the folded structure of any coil unit (11, 22, 33) of the primary side (10).

12. The high-current source (1) according to Claim 9 or 10,
**characterized in that,**
the at least one insulated segment of the coil unit on the secondary side (20) is switched in parallel via intermediate members, whereby at least one isolated segment of the coil unit on the secondary side (20) is distorted, brazed, welded or, when more than one segments are used, bolted to each other.

13. The high-current source (1) according to any of the Claims 9 to 12,
**characterized in that,**
the primary side (10) and the secondary side (20) of the at least one transformer feature power semiconductors with electronic components, whereby the power semiconductors are connected with electromagnetic coils, whereby the connection is made via distortion, bolting, brazing or welding.

14. The high-current source (1) according to any of the previous Claims,
**characterized in that,**
the high-current source features at least one planar transformer with a max current between 3 kA and 6 kA, which is connected with a circuit board structure.

15. Method for providing high-current for a mobile welding system, comprising at least one high-frequency inverter, at least one transformer and at least one rectifier unit,
**characterized in that**
the primary and the secondary side of the at least one transformer are operated synchronously.
